# FASCICULE DE BREVET EUROPEEN

(11) **EP 4 366 965 B1**
(45) Date de publication et mention de la délivrance du brevet: **25.06.2025**
(21) Numéro de dépôt: 22750867.8
(22) Date de dépôt: 07.07.2022
(51) Int. Cl.: B60J 1/02, B60J 1/08, B60R 11/00, B60J 1/00

(54) **ÉLEMENT VITRE POUR LA TRANSMISSION DE RAYONS LUMINEUX INFRAROUGES ET PROCEDE DE FABRICATION DE CET ELEMENT VITRE**
GLASELEMENT ZUR ÜBERTRAGUNG VON INFRAROTLICHTSTRAHLEN UND VERFAHREN ZUR HERSTELLUNG DES GLASELEMENTS
GLAZED ELEMENT FOR THE TRANSMISSION OF INFRARED LIGHT RAYS AND METHOD FOR MANUFACTURING SAID GLAZED ELEMENT

(30) Priorité: 07.07.2021 FR 2107357
(43) Date de publication de la demande: 15.05.2024
(73) Titulaire: Saint-Gobain Sekurit France, 60150 Thourotte (FR)
(72) Inventeur: SILVESTRINI, Laurent, 60400 BUSSY (FR); KLEO, Christophe, 60350 ATTICHY (FR)
(74) Mandataire: Saint-Gobain Recherche
(86) Numéro de dépôt international: PCT/FR2022/051370
(87) Numéro de publication internationale: WO 2023/281228

(56) Documents cités:
- GB-A- 2 271 139
- US-A1- 2007 216 768

## Description

### DOMAINE DE L'INVENTION

La présente invention concerne un élément vitré, par exemple un pare-brise ou une vitre latérale de véhicule. En particulier, la présente invention concerne un élément vitré adapté à la transmission de rayons lumineux infrarouges.

### ETAT DE LA TECHNIQUE

Dans un véhicule, il est connu d'utiliser une caméra thermique, adaptée pour imager des rayonnements infrarouges. L'image ainsi obtenue peut être utilisée par un système d'aide à la conduite. En effet, la caméra thermique peut permettre à un conducteur du véhicule de distinguer des obstacles à la conduite du véhicule dans des conditions de brouillard, ou par exemple de faible luminosité. La caméra thermique peut être reliée à un système d'aide à la conduite, de manière à détecter automatiquement les obstacles qui ne sont pas visibles par le conducteur du véhicule.

Toutefois, l'intégration d'une caméra thermique à l'intérieur du véhicule peut être empêchée par l'absorption des rayons lumineux infrarouges d'un vitrage du véhicule. En effet, le taux de transmission d'un rayon lumineux au travers d'un pare-brise est typiquement inférieur à 50 % pour une longueur d'onde du rayon lumineux supérieure à 800 nanomètres.

À cet effet, le document WO 2021/043838 décrit un élément vitré dans lequel un vitrage du pare-brise comprend un ajour. Un insert formé par un matériau transparent aux rayons lumineux infrarouges est agencé dans l'ajour. Ainsi, les rayons lumineux infrarouges peuvent traverser le pare-brise au travers de l'insert, de manière à être détectés par une caméra thermique agencée à l'intérieur du véhicule. De sorte à assurer une étanchéité du pare-brise au travers de l'ajour, un anneau en matériau souple est agencé entre l'insert et le vitrage du pare-brise de sorte à former un joint. L'anneau est collé à une paroi formée par l'ajour.

Toutefois, l'affleurement de l'insert et du vitrage n'est pas assuré par un tel élément vitré. En effet, lors de la fabrication de l'élément vitré, un alignement précis de l'insert et du vitrage selon la même surface extérieure est difficile à mettre en œuvre. De plus, une colle utilisée lors de la fixation de l'anneau au vitrage du pare-brise peut déborder sur une face extérieure du vitrage, et ainsi détériorer l'affleurement de l'élément vitré.

US 2007/216768 A1 divulgue un système comprenant un pare-brise muni d'un premier vitrage s'étendant selon une première surface, le dit vitrage comprenant une encoche, qui définit une paroi intérieure s'étendant selon une épaisseur du premier vitrage. Un système de transmission des rayons lumineux infrarouges monté fixement au premier vitrage est constitué par un deuxième vitrage, qui est transparent aux rayons lumineux infrarouges et encastré en contact direct avec le premier vitrage, et un insert qui comprend une paroi latérale recouvrant la paroi intérieure et s'étendant depuis la deuxième face du vitrage vers sa première face.

### EXPOSE DE L'INVENTION

Un but de l'invention est de proposer une solution pour faciliter et améliorer un alignement entre un vitrage de véhicule et un insert adapté à la transmission de rayons lumineux infrarouges dans un tel vitrage, tout en améliorant l'affleurement du vitrage et de l'insert au regard de l'état de la technique. Ce but est au moins partiellement atteint dans le cadre de la présente invention grâce à un élément vitré, comprenant :
- un premier vitrage s'étendant selon une première surface, le premier vitrage présentant une première face principale et une deuxième face principale, opposée à la première face par rapport au premier vitrage, le premier vitrage comprenant un ajour, l'ajour définissant une paroi intérieure du premier vitrage, s'étendant selon une épaisseur du premier vitrage et définissant un passage entre la première face et la deuxième face, le premier vitrage présentant un premier coefficient *a*₁ d'absorption lumineuse pour un rayon lumineux présentant au moins une longueur d'onde choisie entre 800 nm et 15 µm,
- un système de transmission des rayons lumineux infrarouges monté fixe au premier vitrage,

le système de transmission des rayons infrarouges comprenant un support et un deuxième vitrage, le deuxième vitrage présentant un deuxième coefficient *a₂* d'absorption lumineuse pour un rayon lumineux présentant au moins une longueur d'onde choisie entre 800 nm et 15 µm, le deuxième coefficient *a₂* étant strictement inférieur au premier coefficient *a₁*,
le support comprenant une paroi latérale recouvrant au moins partiellement la paroi intérieure et s'étendant depuis la deuxième face vers la première face, préférentiellement selon une première direction perpendiculaire à la première surface, le support comprenant une collerette montée fixe à la paroi latérale et s'étendant sur la deuxième face, préférentiellement dans un plan parallèle à la première surface,
le deuxième vitrage s'étendant selon la première surface et étant encastré dans le support, et entouré par la paroi latérale de sorte que le support et le deuxième vitrage sont directement en contact,
la paroi latérale étant insérée dans l'ajour de sorte que l'ajour entoure entièrement la paroi latérale,
la collerette étant montée fixe sur la deuxième face de sorte à étanchéifier la première face de la deuxième face.

La présente invention est avantageusement complétée par les caractéristiques suivantes, prises individuellement ou en l'une quelconque de leurs combinaisons techniquement possibles :
- l'élément vitré comprend une couche adhésive, la couche adhésive étant en contact avec la deuxième face et avec une face de la collerette agencée en regard la deuxième face, la couche adhésive entourant entièrement la paroi latérale,
- la paroi latérale s'étend selon la première direction, depuis la collerette jusqu'à, au plus, un sommet du support, une distance entre la deuxième face et le sommet du support selon la première direction étant inférieure ou égale à l'épaisseur e du premier vitrage, et préférentiellement strictement inférieure à l'épaisseur e du premier vitrage,
- le deuxième vitrage est surmoulé par le support,
- le support et le deuxième vitrage présentent des éléments à complémentarité de formes configurés pour bloquer un mouvement du deuxième vitrage par rapport au support dans une direction normale à la première surface,
- le support présente une face intérieure, préférentiellement formée par la paroi latérale et/ou par la collerette, la face intérieure étant agencée en regard du deuxième vitrage, la face intérieure comprenant une encoche formant un logement, le deuxième vitrage étant monté dans le logement formé par l'encoche,
- le deuxième vitrage présente une base et une face opposée à la base par rapport au deuxième vitrage, une aire de la base étant strictement supérieure à une aire de la face, le deuxième vitrage présentant préférentiellement une forme tronconique définie entre la base et la face,
- le support présente une face intérieure, préférentiellement formée par la paroi latérale et/ou par la collerette, la face intérieure étant agencée en regard du deuxième vitrage, la face intérieure comprenant une encoche formant un logement, le deuxième vitrage étant monté dans le logement formé par l'encoche, et la base du deuxième vitrage étant montée dans le logement,
- le deuxième vitrage présente un coefficient *a₂* d'absorption d'un rayon lumineux inférieur à 0,5 cm⁻¹, le rayon lumineux présentant au moins une longueur d'onde choisie entre 800 nm et 15 µm,
- le deuxième vitrage comprend du sulfure de zinc et/ou du séléniure de zinc,
- la paroi latérale et la collerette forment un élément monolithique,
- l'élément vitré comprend au moins un élément choisi parmi une caméra infrarouge, préférentiellement thermique, et une source lumineuse configurée pour émettre des rayons lumineux infrarouges, le ou les élément(s) étant disposé(s) en regard du deuxième vitrage du côté de la deuxième face par rapport au premier vitrage,
- l'élément vitré comprend un boîtier, le boîtier étant monté fixe au premier vitrage, au moins un élément choisi parmi une caméra infrarouge, préférentiellement thermique, et une source lumineuse configurée pour émettre des rayons lumineux infrarouges, l'élément étant monté au boîtier en regard du deuxième vitrage,
- le deuxième vitrage présente une forme choisie parmi une forme allongée et une forme coudée, préférentiellement une forme en « *L* ».

Un autre aspect de l'invention est un procédé de fabrication d'un élément vitré selon un mode de réalisation de l'invention, le procédé comprenant les étapes de :
(a) agencement du deuxième vitrage dans un moule d'injection, le deuxième vitrage étant agencé entre une pluralité d'éléments de centrage, les éléments de centrage étant agencés dans le moule d'injection et étant configurés pour positionner le deuxième vitrage à une position prédéterminée dans le moule d'injection,
(b) injection d'un matériau polymère dans le moule d'injection de sorte à former le support, préférentiellement en surmoulant le deuxième vitrage,
(c) insertion du système de transmission des rayons lumineux infrarouges formé par le deuxième vitrage et par le support lors de l'étape (b) dans l'ajour du premier vitrage.

Avantageusement, le procédé comprend une étape antérieure à l'étape (c) d'insertion du système, lors de laquelle une plaque est montée sur la première face de sorte à recouvrir l'ajour.

Un autre aspect de l'invention est un deuxième vitrage présentant un coefficient *a₂* d'absorption d'un rayon lumineux inférieur à 0,5 cm⁻¹, le rayon lumineux présentant au moins une longueur d'onde choisie entre 800 nm et 15 µm, le deuxième vitrage présentant une forme choisie parmi une forme allongée et une forme coudée, préférentiellement une forme en « *L*».

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
[Fig. 1] - la figure 1 illustre une coupe d'un élément vitré selon un mode de réalisation de l'invention,
[Fig. 2] - la figure 2 illustre une coupe d'un élément vitré selon un mode de réalisation de l'invention,
[Fig. 3] - la figure 3 illustre une coupe d'un élément vitré selon un mode de réalisation de l'invention,
[Fig. 4] - la figure 4 illustre un détail d'une coupe d'un élément vitré selon un mode de réalisation de l'invention,
[Fig. 5] - la figure 5 illustre une vue d'ensemble d'un élément vitré selon un mode de réalisation de l'invention,
[Fig. 6] - la figure 6 illustre une vue d'ensemble d'un élément vitré selon un mode de réalisation de l'invention,
[Fig. 7] - la figure 7 illustre un système de transmission des rayons lumineux infrarouges selon un mode de réalisation de l'invention présentant une forme de révolution,
[Fig. 8] - la figure 8 illustre un système de transmission des rayons lumineux infrarouges selon un mode de réalisation de l'invention présentant une forme en étoile,
[Fig. 9] - la figure 9 illustre un système de transmission des rayons lumineux infrarouges selon un mode de réalisation de l'invention présentant une forme coudée,
[Fig. 10] - la figure 10 illustre un procédé de fabrication d'un élément vitré selon un mode de réalisation de l'invention,
[Fig. 11] - la figure 11 illustre un détail d'une coupe d'un élément vitré selon un mode de réalisation de l'invention,
[Fig. 12] - la figure 12 illustre un détail d'une coupe d'un élément vitré selon un mode de réalisation de l'invention, dans lequel le support présente un évasement,
[Fig. 13] - la figure 13 illustre un détail d'une coupe d'un élément vitré selon un mode de réalisation de l'invention, dans lequel des éléments à complémentarité de forme sont formés par une série de rainures,
[Fig. 14] - la figure 14 illustre un détail d'un support d'un élément vitré selon un mode de réalisation de l'invention,
[Fig. 15] - la figure 15 illustre un détail d'une coupe d'un élément vitré selon un mode de réalisation de l'invention,
[Fig. 16] - la figure 16 illustre une forme du deuxième vitrage rapportée dans un plan parallèle à une épaisseur du premier vitrage,
[Fig. 17] - la figure 17 illustre un élément vitré comprenant un dispositif essuie-glace et un agencement du deuxième vitrage permettant à une face du deuxième vitrage être essuyée par le dispositif essuie-glace.

Sur l'ensemble des figures, les éléments similaires portent des références identiques.

### DEFINITIONS

On entend par « *vitrage* » une structure comprenant au moins une feuille de verre organique ou minérale, préférentiellement adaptée à être montée dans un véhicule, par exemple un véhicule automobile ou ferroviaire.

Le vitrage peut comprendre une feuille de verre simple ou bien un ensemble vitré multicouche dont au moins une couche est une feuille de verre.

Un vitrage peut comprendre une feuille de verre organique. Préférentiellement, le verre organique est formé par un composé comprenant des acrylates, préférentiellement par du polyméthacrylate de méthyle (d'acronyme PMMA). Il peut également être formé en polycarbonate.

Un vitrage peut comprendre un ensemble vitré. L'ensemble vitré comprend au moins une feuille de verre. Le verre peut être du verre organique ou minéral. Le verre peut être trempé. L'ensemble vitré est de préférence un vitrage feuilleté. On entend par « *vitrage feuilleté* » un ensemble vitré comprenant au moins deux feuilles de verre et un film intercalaire formé en matière plastique, préférentiellement viscoélastique, séparant les deux feuilles de verre. Le film intercalaire en matière plastique peut comprendre une ou plusieurs couches, d'un polymère viscoélastique tel que le poly(butyral de vinyle) (PVB) ou un copolymère éthylène-acétate de vinyle (EVA). Le film intercalaire est de préférence en PVB standard ou en PVB acoustique (tel que le PVB acoustique mono-couche ou tri-couche). Le PVB acoustique peut comprendre trois couches : deux couches externes en PVB standard et une couche interne en PVB additionné de plastifiant de manière à la rendre moins rigide que les couches externes.

### DESCRIPTION DETAILLEE DE L'INVENTION

### Architecture générale de l'élément vitré 1

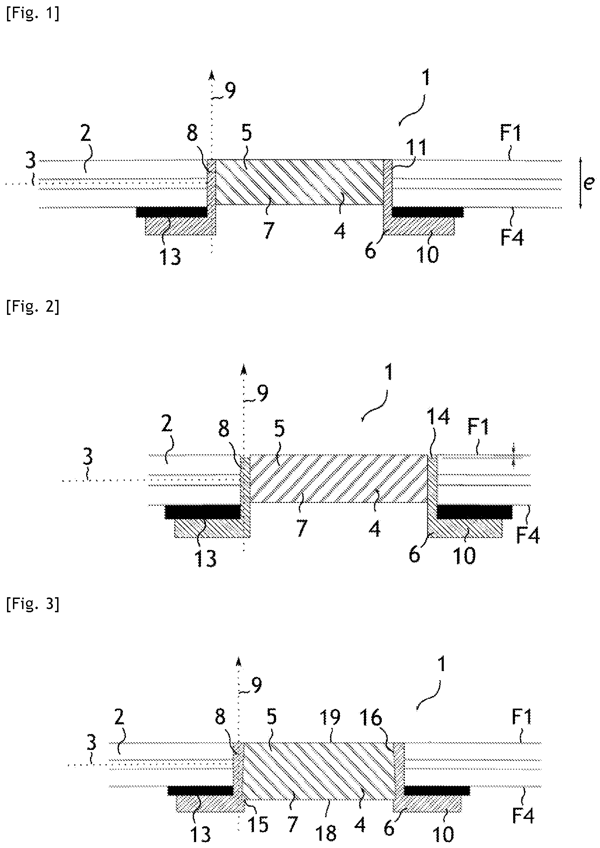

En référence à la figure 1, à la figure 2 et à la figure 3, un élément vitré 1 selon un mode de réalisation de l'invention comprend un premier vitrage 2 s'étendant selon une première surface 3. Le premier vitrage 2 peut être un pare-brise de véhicule, un vitrage latéral de véhicule, une lucarne, une lunette arrière de véhicule, par exemple une lunette arrière chauffante.

Le premier vitrage 2 présente une première face F1, destinée à être exposée à l'extérieur du véhicule. Le premier vitrage 2 présente une deuxième face F4, opposée à la première face F1 par rapport au premier vitrage 2, et préférentiellement parallèle à la première face F1. La deuxième face F4 est destinée à être exposée dans l'habitacle du véhicule, c'est-à-dire à l'intérieur du véhicule.

Le premier vitrage 2 présente un premier coefficient *a₁* d'absorption lumineuse pour un rayon lumineux présentant au moins une longueur d'onde choisie entre 800 nm et 15 µm, dans la gamme du rayonnement infrarouge. Préférentiellement, le premier coefficient *a₁* est strictement supérieur à 0,5 cm⁻¹, notamment strictement supérieur à 1 cm⁻¹. En effet, le premier vitrage 2 présente typiquement une absorption aux rayons infrarouges élevée de manière à éviter que le rayonnement du soleil ne puisse chauffer l'habitacle du véhicule jusqu'à des températures gênant le confort de l'utilisateur.

Le premier vitrage 2 comprend un ajour 5. L'ajour 5 définit une paroi intérieure 11 du premier vitrage 2, la paroi intérieure 11 s'étendant selon une épaisseur e du premier vitrage 2. L'ajour 5 est préférentiellement un ajour traversant, reliant la première face F1 à la deuxième face F4.

L'élément vitré 1 comprend un système 4 de transmission des rayons lumineux infrarouges. Le système 4 est monté fixe au premier vitrage 2. Le système 4 de transmission des rayons infrarouges comprend un support 6 et un deuxième vitrage 7.

Le deuxième vitrage 7 présente un deuxième coefficient *a₂* d'absorption lumineuse pour un rayon lumineux présentant au moins une longueur d'onde choisie entre 800 nm et 15 µm. Le deuxième coefficient *a₂* est strictement inférieur au premier coefficient *a₁*. Ainsi, la transmission d'un rayon lumineux infrarouge est plus élevée au travers du deuxième vitrage 7 au regard d'une transmission du même rayon lumineux au travers du premier vitrage 2.

Le support 6 comprend une paroi latérale 8. La paroi latérale 8 recouvre au moins partiellement la paroi intérieure 11, et préférentiellement recouvre entièrement la paroi intérieure 11. La paroi latérale 8 s'étend principalement depuis la deuxième face F4 vers la première face F1, notamment jusqu'à la première face F1, et préférentiellement selon une première direction 9, perpendiculaire à la première surface 3.

Le support 6 comprend une collerette 10 montée fixe à la paroi latérale 8. La collerette 10 s'étend sur la deuxième face F4 et préférentiellement selon un plan parallèle à la première surface 3.

Le deuxième vitrage 7 peut s'étendre selon la première surface 3. Le deuxième vitrage 7 est encastré dans le support 6, tout en étant entouré par la paroi latérale 8. Ainsi, le deuxième vitrage 7 est monté fixe mécaniquement au support 6. Le support 6 et le deuxième vitrage 7 sont directement en contact. Le montage entre le support 6 et le deuxième vitrage 7 peut être dépourvu d'une couche adhésive.

La paroi latérale 8 est insérée dans l'ajour 5 de sorte que la paroi intérieure 11 entoure la paroi latérale 8, et préférentiellement entoure entièrement la paroi latérale 8.

La collerette 10 est montée fixe sur la deuxième face F4 de sorte à étanchéifier la première face F1 de la deuxième face F4. De par la présence de la collerette 10 et du montage du support 6 au premier vitrage 2 par la collerette 10, il est possible à la fois de ne pas utiliser d'adhésif entre le premier vitrage 2 et la paroi latérale 8, et entre la paroi latérale 8 et le deuxième vitrage 7, de manière à éviter tout débordement d'un adhésif sur la première surface F1 et ainsi garder une face extérieure de l'élément vitré 1 affleurante, tout en étanchéifiant la première face F1 de la deuxième face F4 au regard de l'eau ou des poussières.

### Montage fixe de la collerette 10 à la deuxième face F4

L'élément vitré 1 peut comprendre une couche adhésive 13. La couche adhésive 13 est en contact avec la deuxième face F4 et avec une face de la collerette agencée en regard la deuxième face F4. La couche adhésive 13 est agencée entre la deuxième face F4 et entre la face de la collerette 10 qui est en regard de la deuxième face F4. La couche adhésive 13 peut entourer entièrement la paroi latérale 8, de sorte à former un joint étanche entre la deuxième face F4 et la collerette 10.

La couche adhésive 13 peut être formée par une colle. La colle peut être une colle polyuréthane (PU). Préférentiellement, la colle formant la couche adhésive 13 présente une dureté en Shore A. La couche adhésive 13 peut être également formée par un ruban adhésif double face. Ainsi, la liaison entre la première face F1 et la collerette 10 peut-être une liaison amovible, permettant de remplacer le système 4 au cours de l'utilisation de l'élément vitré 1, par exemple quand le deuxième vitrage 7 est abîmé.

### Support 6

Le support 6 comprend la paroi latérale 8 et la collerette 10. La paroi latérale 8 s'étend selon la première direction 9, depuis la collerette 10 jusqu'à, au plus, un sommet 14 du support 6. Une distance entre la deuxième face F4 et le sommet 14 du support 6 selon la première direction 9 est inférieure ou égale à l'épaisseur e du premier vitrage 2. En référence à la figure 2, la distance entre la deuxième face F4 et le sommet 14 du support 6 selon la première direction est strictement inférieure à l'épaisseur e du premier vitrage 2. Ainsi, il est possible de contrôler l'affleurement de l'ensemble vitré 1 de sorte qu'il soit impossible que le support 6 dépasse de la première face F1. De préférence, la distance entre la première face F1 et le sommet 14 du support 6 selon la première direction est comprise entre 0 mm et 0,05 mm exclus. Le deuxième vitrage 7 peut présenter une base 18 et une face 19 opposée à la base par rapport au deuxième vitrage 7, préférentiellement localement parallèle à la base 18. De préférence, la face 19 opposée à la base est agencée, par rapport à la première direction 9, entre la deuxième face F4 incluse et entre la première face F1.

La paroi latérale 8 et la collerette 10 peuvent former un élément monolithique, préférentiellement formé par injection d'un matériau du support 6 dans un moule.

Le support 6 peut être formé d'un matériau thermoplastique ou d'un matériau métallique. Le matériau du support 6 peut être par exemple du polyuréthane ou de l'aluminium. De préférence, le matériau de support 6 présente un coefficient de dilatation thermique compris entre 0,8 fois le coefficient de dilatation thermique du verre et entre 1,2 fois le coefficient de dilatation thermique du verre. Ainsi, il est possible d'éviter d'utiliser une pièce en matériau élastique entre le premier vitrage 2 et le support 6, et/ou entre le support 6 et le deuxième vitrage 7 pour compenser les différences de dilatation thermique des différents éléments de l'élément vitré 1. Le matériau du support 6 comprend préférentiellement des fibres de verre. Ainsi, il est possible de minimiser la différence entre le coefficient de dilation thermique du matériau du support 6 et entre le coefficient de dilation thermique du matériau du premier vitrage 2 et/ou du deuxième vitrage 7. Le matériau du support 6 peut également comprendre des billes de verre. Les billes de verre permettent également de minimiser la différence entre le coefficient de dilatation thermique du matériau du support 6 et entre le coefficient de dilatation thermique du matériau du premier vitrage de et/ou du deuxième vitrage 7.

### Deuxième vitrage 7

Le deuxième vitrage 7 peut présenter un coefficient *a₂* d'absorption lumineuse inférieur à 0,5 cm⁻¹ pour un rayon lumineux présentant au moins une longueur d'onde choisie entre 800 nm et 15 µm, et préférentiellement inférieur à 0,1 cm⁻¹. La longueur d'onde peut notamment être choisie entre 8 µm et 12 µm et préférentiellement choisie entre 9,5 µm et 10,5 µm. Ainsi, le deuxième vitrage 7 permet spécifiquement la transmission des rayons lumineux d'une caméra thermique. Le deuxième vitrage 7 peut être formé par un matériau comprenant du sulfure de zinc (ZnS), du séléniure de zinc (ZnSe) et/ou du fluorure de baryum. Ainsi, il est possible de maximiser la transmission des rayons lumineux infrarouges au travers du deuxième vitrage 7 de sorte à imager thermiquement des éléments extérieurs au véhicule.

De préférence, le deuxième vitrage 7 est un insert. L'insert peut être formé par un matériau monolithique présentant un coefficient *a₂* d'absorption lumineuse inférieur à 0,5 cm⁻¹ pour un rayon lumineux présentant au moins une longueur d'onde choisie entre 800 nm et 15 µm, et préférentiellement inférieur à 0,1 cm⁻¹.

Le matériau du deuxième vitrage 7 peut comprendre :
- un composé comprenant un sulfure de zinc multispectral, en particulier obtenu après pressage isostatique à chaud, notamment comprenant du sélénium, tel que ZnSₓSe₁₋ₓ où x est supérieur ou égal à 0,97 inclus et inférieur à 1 inclus, en particulier le ZnS multispectral, et/ou
- un composé comprenant un séléniure de zinc, en particulier le ZnSe, notamment incluant du soufre, tel que ZnSe_{y}S_{1-y} où y est de préférence supérieur ou égal à 0,97 inclus et inférieur à 1 inclus, et/ou
- un composé comprenant un fluorure de baryum, notamment comprenant du calcium et/ou du strontium, notamment Ba₁₋ᵢ₋ⱼCaᵢSrⱼF₂ où i+j sont strictement inférieur à 1, et i et j sont de préférence chacun supérieurs à 0,25 inclus, ou Ba₁₋ᵢCaᵢF₂ où i est strictement inférieur à 1 et de préférence supérieur à 0,25 inclus, en particulier le BaF₂.

Le deuxième vitrage 7 peut être transparent à un rayon lumineux présentant une longueur d'onde comprise entre 800 nm et 15 µm, c'est-à-dire dans le spectre des rayons lumineux infrarouges. En particulier, le deuxième vitrage 7 peut présenter une transmission lumineuse d'au moins 50%, et notamment d'au moins 70%, pour un rayon lumineux présentant une longueur d'onde comprise entre 800 nm et 15 µm.

Le deuxième vitrage 7 peut être transparent à un rayon lumineux présentant une longueur d'onde comprise entre 400 nm et 800 µm, c'est-à-dire dans le spectre visible. En particulier, le deuxième vitrage 7 peut présenter une transmission lumineuse d'au moins 50%, et notamment d'au moins 70%, pour un rayon lumineux présentant une longueur d'onde comprise entre 400 nm et 800 µm.

De préférence, le deuxième vitrage 7 est formé par un matériau présentant un module de rupture supérieur à 20MPa. Le matériau formant le deuxième vitrage 7 peut être polycristallin, et peut être obtenu par dépôt chimique en phase vapeur et/ou par pressage isostatique à chaud.

En variante, le matériau formant le deuxième vitrage 7 peut être un matériau organique et comprendre un polymère hybride organo-soufré réticulé, comprenant des chaînes linéaires de soufre réticulées par des comonomères organiques. De préférence, les comonomères organiques peuvent être choisis dans le groupe constitué de 1,3-diisopropénylbenzène (DIB), 1,3,5-triisopropénylbenzène (TIB), di-iodobenzène, norbornadiène (NBD), norbornadiène dimère (NBD2), et tétravinylétain (TVSn). Le polymère hybride organo-soufré peut présenter de 0,5 à 5 % en masse d'un autre élément appartenant au groupe des chalcogènes, de préférence du sélénium (Se). Une température de transition vitreuse du matériau organique peut être suprieure à 50 °C inclus, et de préférence dans une gamme comprise entre 60°C à 180°C inclus, et préférentiellement compris entre 80°C à 160°C inclus.

Le deuxième vitrage 7 présente de préférence une forme choisie parmi une forme allongée et une forme coudée, préférentiellement une forme en « *L* », la forme du deuxième vitrage étant préférentiellement rapportée à la première surface 3. Ainsi, il est possible d'agencer plusieurs éléments optiques en regard du deuxième vitrage 7 tout en minimisant sa taille.

### Système 4 de transmission des rayons lumineux infrarouges

En référence à la figure 1, à la figure 2, et à la figure 3, le deuxième vitrage 7 peut être encastré dans le support par surmoulage du deuxième vitrage 7 par le support 6. Le deuxième vitrage 7 est ainsi surmoulé par le support 6. Ainsi, il est possible d'éviter d'utiliser un adhésif pour monter le deuxième vitrage 7 au support 6.

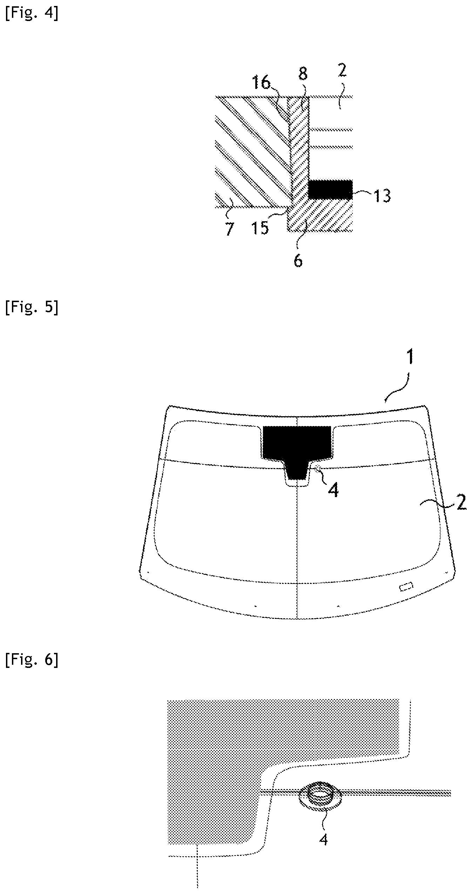

En référence à la figure 3 et à la figure 4, le support 6 et le deuxième vitrage 7 peuvent présenter des éléments à complémentarité de forme configurés pour bloquer un mouvement du deuxième vitrage 6 par rapport au support dans une direction normale à la première surface 3. Les éléments à complémentarité de forme peuvent être une paire d'éléments formée par une encoche et un bossage. L'encoche peut être formée dans le support 6 et le bossage peut être formé sur le deuxième vitrage 7, ou l'encoche peut être formée dans le deuxième vitrage 7 et le bossage peut être formé sur le support 6. Le support 6 peut présenter une face intérieure 16. La face intérieure 16 peut être formée par la paroi latérale 8 et/ou par la collerette 10. La face intérieure 16 du support 6 est agencée en regard du deuxième vitrage 7, et peut comprendre une encoche 15 formant un logement. Le deuxième vitrage 7 peut être monté dans le logement formé par l'encoche 15. Ainsi, il est possible empêcher le mouvement du deuxième vitrage 7 selon un sens qui suit la première direction 9, sans utiliser d'adhésif entre le deuxième vitrage 7 et le support 6. De préférence, l'encoche 15 est agencée du côté de la deuxième face F4 par rapport au premier vitrage 2.

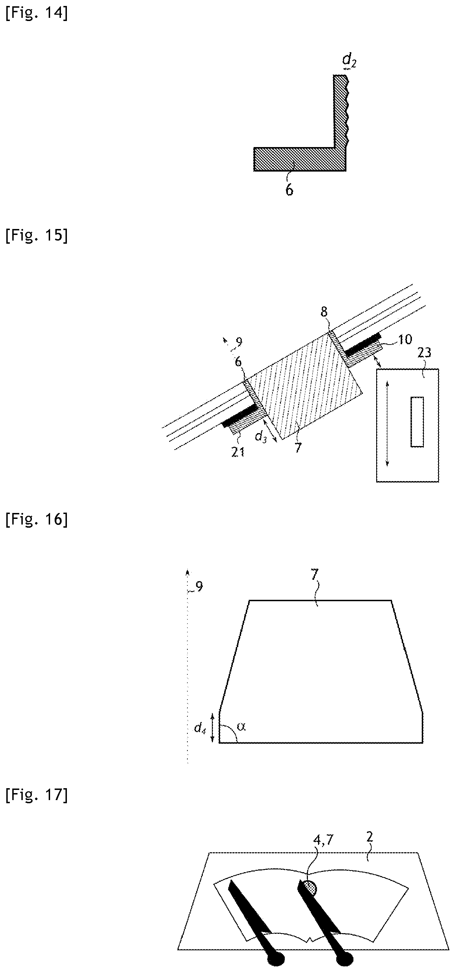

En référence à la figure 3 et à la figure 4, le deuxième vitrage 7 peut présenter une base 18 et une face 19 opposée à la base par rapport au deuxième vitrage 7, préférentiellement localement parallèle à la base 18, une aire de la base 18 étant strictement supérieure à une aire de la face 19. Ainsi, de par une asymétrie du deuxième vitrage 7 par rapport à la première surface 3, le mouvement du deuxième vitrage 7 n'est pas permis dans une direction normale à la première surface 3. Préférentiellement, le deuxième vitrage 7 présente une forme tronconique définie entre une base du deuxième vitrage 7 et une face du deuxième vitrage 7 parallèle à la base du deuxième vitrage 7. Ainsi, de par le contact entre la paroi latérale 8 et une paroi tronconique du deuxième vitrage 7, il est possible d'empêcher un mouvement du deuxième vitrage 7 selon un sens qui suit la première direction 9, orienté depuis la base du deuxième vitrage 7 vers la face du deuxième vitrage 7 parallèle à la base. En référence à la figure 16, le deuxième vitrage 7 peut présenter une forme qui, rapportée dans un plan parallèle à la première direction 9, ne présente pas d'angle strictement inférieur à 90°. Ainsi, les bords du deuxième vitrage 7 sont renforcés mécaniquement. En particulier, la forme peut comprendre une extrémité cylindrique, c'est-à-dire dont les génératrices sont parallèles, de sorte que la forme rapportée dans un plan parallèle à la première direction 9 présente une base formant des angles α égaux à 90°. Le reste de la forme, c'est-à-dire la partie s'étendant depuis l'extrémité cylindrique vers la face 19, peut être tronconique. L'épaisseur *d₄* de l'extrémité cylindrique par rapport à la première direction 9 peut être supérieure à 0,2 mm, notamment à 0,6 mm, et préférentiellement à 1 mm.

De préférence, la base du deuxième vitrage 7 est montée dans le logement. Ainsi, il est possible d'empêcher un mouvement du deuxième vitrage 7 selon la première direction 9, sans utiliser d'adhésif entre le deuxième vitrage 7 et le support 6.

En référence à la figure 5 et à la figure 6, le système 4 est agencé préférentiellement en périphérie du premier vitrage 2. Le système 4 peut être agencé à proximité de l'emplacement du premier vitrage 2 sur lequel un rétroviseur du véhicule est monté.

### Système d'aide à la conduite

L'élément vitré 1 peut comprendre au moins une caméra infrarouge, préférentiellement thermique. La caméra est disposée en regard du deuxième vitrage 7 du côté de la deuxième face F4 par rapport au premier vitrage 2. L'élément vitré 1 un peut également comprendre un LIDAR (acronyme anglais de « *laser imaging detection and ranging* »). Le LIDAR peut comprendre une caméra infrarouge et une source lumineuse configurée pour émettre un rayon lumineux infrarouge, détectable par la caméra infrarouge. La caméra infrarouge est alors disposée en regard du deuxième vitrage 7 du côté de la deuxième face F4 par rapport au premier vitrage 2, et la source lumineuse est également disposée en regard du deuxième vitrage 7 du côté de la deuxième face F4 par rapport au premier vitrage 2. Ainsi, il est possible d'utiliser le même système 4 pour la transmission de rayons lumineux infrarouges en provenance et/ou vers plusieurs éléments optiques agencés en regard du deuxième vitrage 7, ce qui permet de simplifier la fabrication d'un système d'aide à la conduite.

L'élément vitré 1 peut comprendre un boîtier. Le boîtier peut être monté fixe au premier vitrage 2. Au moins une caméra infrarouge, préférentiellement thermique, peut être montée au boîtier en regard du deuxième vitrage 7. Un LIDAR peut également être monté au boîtier. L'élément vitré 1 peut comprendre une pièce comprenant le support 6 et le boîtier, le support 6 étant monté fixe au boîtier. Ainsi, le boîtier peut être monté fixe au premier vitrage 2 par l'intermédiaire de la collerette 10 du support 6. La pièce peut être monolithique et former à la fois le support 6 et le boîtier.

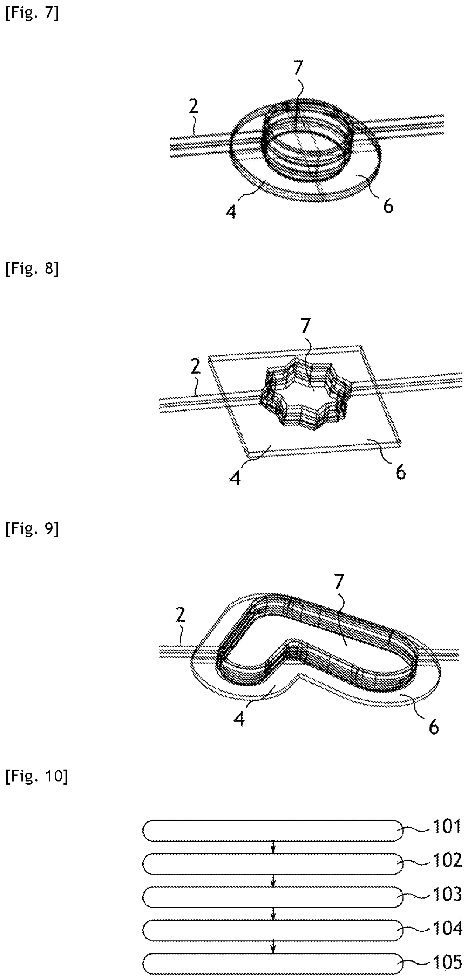

En référence à la figure 7, à la figure 8, et à la figure 9, la forme du support 6 et la forme du deuxième vitrage 7 peuvent être choisies de sorte à permettre un agencement de différents éléments émetteurs ou récepteurs de rayons lumineux infrarouges en regard du deuxième vitrage 7. En particulier, en référence à la figure 9, le système 4 et/ou le deuxième vitrage 7 peut présenter une forme allongée ou une forme coudée ou en « L » à ces fins.

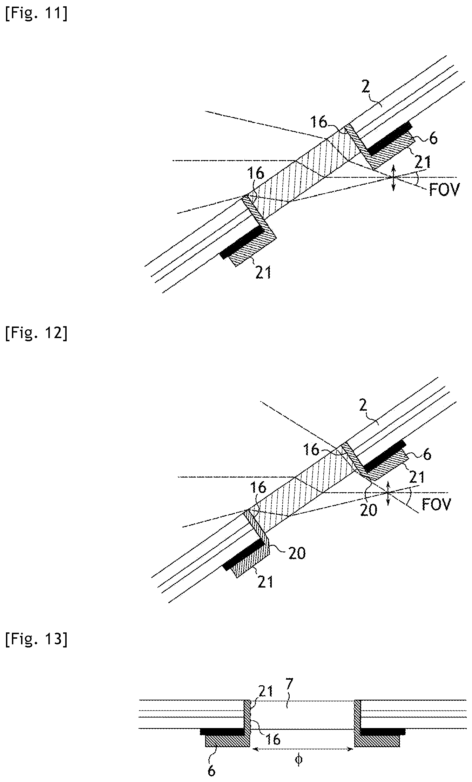

La collerette 10 comprend une face externe 21, opposée à la face de la collerette agencée en regard la deuxième face F4 par rapport à la collerette. En référence à la figure 12, le support 6 peut présenter un évasement 20 formant une paroi entre la face intérieure 16 et la face externe 21. La figure 11 illustre un vitrage 2 dépourvu d'évasement 20 et la figure 12 illustre un vitrage 2 comprenant un évasement 20. On entend par « *évasement* » qu'une aire d'une surface définie par la face intérieure 16 rapportée à la première surface 3 est strictement inférieure à une aire d'une surface définie par l'évasement 20 rapportée à la première surface 3. Ainsi, des rayons lumineux traversant le deuxième vitrage 7 au voisinage de la face intérieure 16 peuvent être imagés par une caméra agencée à l'intérieur d'un habitacle sans rencontrer une arête formée entre la face intérieure 16 et la face externe 21. La caméra peut ainsi imager un objet avec un champ de vue FOV plus élevé qu'en l'absence d'évasement 20, en évitant ainsi un vignettage en imageant l'objet.

L'évasement 20 peut également présenter une asymétrie de rotation autour de la première direction 9. Ainsi, il n'est pas nécessaire d'orienter le support 6 lors de la fabrication de l'élément vitré 1, notamment lorsqu'il est monté fixe au premier vitrage 2.

L'évasement 20 peut être un biseautage mis en œuvre sur une arête formée par la face intérieure 16 de la paroi latérale et/ou par la face externe 21. L'évasement 20 peut être un chanfrein formé entre la face intérieure 16 et la face externe 21.

En référence à la figure 13, les éléments à complémentarité de forme peuvent être formés par une série de rainures 22 formées sur la face intérieure 16 et par une série de rainures 22 formées sur le deuxième vitrage 7, les rainures formées sur la face intérieure 16 présentant une complémentarité de forme avec les rainures 22 formées sur le deuxième vitrage 7. Chaque rainure 22 peut former une ligne fermée le long de la face intérieure 16. Les rainures 22 peuvent être parallèles les unes aux autres. De préférence, les éléments à complémentarité de forme comprennent au moins deux rainures 22, de préférence au moins trois rainures 22, de préférence au moins quatre rainures 22. Ainsi, au moins une partie de la face intérieure 16 permet d'éviter une réflexion parasite de rayons lumineux. En référence à la figure 14, une section des rainures 22 dans un plan perpendiculaire à la première surface 3 forme des dents de scie. Ainsi, il est possible d'éviter une réflexion de rayons lumineux sur la face intérieure 16 dans une gamme d'angles prédéterminée.

Le deuxième vitrage 7 de l'élément vitré 1 présente un diamètre apparent φ. Le diamètre apparent φ est déterminée par la géométrie du deuxième vitrage 7. Le diamètre apparent φ peut également être déterminé par la géométrie des éléments à complémentarité de forme. En référence à la figure 14, les éléments à complémentarité de forme peuvent présenter une épaisseur *d₂* selon un axe défini par un diamètre du deuxième vitrage 7. Cette épaisseur *d₂* peut être inférieure à un dixième du diamètre du deuxième vitrage 7, et préférentiellement inférieure à un vingtième du diamètre du deuxième vitrage 7. L'épaisseur *d₂* peut être inférieure à 1 mm. Ainsi, il est possible de maintenir mécaniquement le deuxième vitrage 7 dans le support 6 en l'absence d'adhésif tout en maximisant le diamètre apparent φ du deuxième vitrage 7.

En référence à la figure 15, le deuxième vitrage 7 peut s'étendre selon la première direction 9 depuis la paroi latérale 8 en direction de la collerette 10 en dépassant la face externe 21 de la collerette 10 d'une distance de dépassement *d₃*. Une partie du deuxième vitrage 7 est alors agencée d'un côté opposé à la paroi latérale 8 par rapport à la collerette 10. Ainsi, il est possible de diminuer et/ou de supprimer l'effet de vignettage en imageant l'objet, en élargissant le champ de vue au regard d'un élément vitré dans lequel le deuxième vitrage 7 ne dépasserait pas la face externe 21 de la collerette 10. De plus, en référence à la figure 15, le dépassement du deuxième vitrage 7 de la face externe 21 permet d'éviter des problèmes stériques lors de l'agencement de la caméra 23 en regard du deuxième vitrage 7.

### Fabrication de l'élément vitré 1 et du système 4

En référence à la figure 10, un autre aspect de l'invention est un procédé de fabrication d'un élément vitré 1.

Le procédé comprend une étape d'agencement 101 du deuxième vitrage 7 dans un moule d'injection, le deuxième vitrage 7 étant agencé entre une pluralité d'éléments de centrage, les éléments de centrage étant agencés dans le moule d'injection et étant configurés pour positionner le deuxième vitrage 7 à une position prédéterminée dans le moule d'injection. Ainsi, il est possible de centrer avec précision le deuxième vitrage 7 dans le support 6. De préférence, le deuxième vitrage 7 est également monté fixe entre deux broches qui permettent de maintenir le deuxième vitrage 7 à une hauteur prédéterminée dans le moule d'injection.

Le procédé comprend une étape d'injection 102 d'un matériau polymère dans le moule d'injection de sorte à former le support 6, préférentiellement en surmoulant le deuxième vitrage 2.

De préférence, le procédé comprend une étape 103 lors de laquelle une plaque est montée sur la première face F1 de sorte à recouvrir l'ajour. Ainsi, lors de l'insertion ultérieure du support 6 dans l'ajour 5, le sommet du support 6 et la première face F1 du premier vitrage 2 sont en affleurement. En effet, il n'est pas possible, grâce à la plaque, que le sommet du support 6 dépasse la première face F1. De préférence, la plaque comprend un joint d'étanchéité, préférentiellement deux joints d'étanchéité. Le ou les joints d'étanchéité sont chacun agencés en contact avec le premier vitrage 2 et en contact avec le deuxième vitrage 7 de sorte à obturer tout passage entre la deuxième face F4 et la première face F1. Le surmoulage mis en œuvre sur ses joints permet de former une dépression formée par le support 6 agencée entre le premier vitrage 2 le deuxième vitrage 7.

Le procédé comprend une étape d'insertion 104 du système 4 formé par le deuxième vitrage 7 et par le support 6 lors de l'étape 102 dans l'ajour 5 du premier vitrage 2.

### Dispositif essuie-glace 24

En référence à la figure 17, l'élément vitré 1 un peut comprendre un dispositif essuie-glace 24. Le dispositif essuie-glace 24 comprend au moins une raclette d'essuyage 25 agencée en contact de la première face F1 du premier vitrage. Le dispositif essuie-glace 24 est configuré pour contrôler un mouvement de la raquette d'essuyage 25 de sorte que le contact entre la raclette d'essuyage 25 et la première face F1 définisse une surface apte à être essuyée 26 dans la première face F1. Le deuxième vitrage 7 peut présenter une base 18 et une face 19 opposée à la base par rapport au deuxième vitrage 7, préférentiellement localement parallèle à la base 18. Le deuxième vitrage 7 peut être agencé de sorte que la face 19 est comprise dans la surface apte à être essuyé 26. Ainsi, il est possible de nettoyer à la fois le premier vitrage 2 et le deuxième vitrage 7 lors de l'utilisation du dispositif essuie-glace 24.

## Revendications

1. Élément vitré (1), comprenant :
- un premier vitrage (2) s'étendant selon une première surface (3), le premier vitrage présentant une première face (F1) principale et une deuxième face (F4) principale, opposée à la première face (F1) par rapport au premier vitrage (2), le premier vitrage (2) comprenant un ajour (5), l'ajour définissant une paroi intérieure (11) du premier vitrage (2) s'étendant selon une épaisseur du premier vitrage (2) et définissant un passage entre la première face (F1) et la deuxième face (F4), le premier vitrage (2) présentant un premier coefficient a*₁* d'absorption lumineuse pour un rayon lumineux présentant au moins une longueur d'onde choisie entre 800 nm et 15 µm,
- un système (4) de transmission des rayons lumineux infrarouges monté fixe au premier vitrage (2), l'élément vitré (1) étant **caractérisé en ce que** :
- le système (4) de transmission des rayons infrarouges comprend un support (6) et un deuxième vitrage (7), le deuxième vitrage (7) présentant un deuxième coefficient *a₂* d'absorption lumineuse pour un rayon lumineux présentant au moins une longueur d'onde choisie entre 800 nm et 15 µm, le deuxième coefficient *a₂* étant strictement inférieur au premier coefficient *a₁*,
le support (6) comprenant une paroi latérale (8) recouvrant au moins partiellement la paroi intérieure (11) et s'étendant depuis la deuxième face (F4) vers la première face (F1), le support(6) comprenant une collerette (10) montée fixe à la paroi latérale (8) et s'étendant sur la deuxième face (F4),
le deuxième vitrage (7) s'étendant selon la première surface (3) et étant encastré dans le support (6), et entouré par la paroi latérale (8) de sorte que le support (6) et le deuxième vitrage (7) sont directement en contact,
la paroi latérale (8) étant insérée dans l'ajour (5) de sorte que l'ajour (5) entoure entièrement la paroi latérale (8),
la collerette (10) étant montée fixe sur la deuxième face (F4) de sorte à étanchéifier la première face (F1) de la deuxième face (F4).

2. Élément vitré (1) selon la revendication 1, comprenant une couche adhésive (13), la couche adhésive (13) étant en contact avec la deuxième face (F4) et avec une face de la collerette (10) agencée en regard la deuxième face (F4), la couche adhésive (13) entourant entièrement la paroi latérale (8).

3. Élément vitré (1) selon la revendication 1 ou 2, dans lequel la paroi latérale (8) s'étend selon la première direction (9), depuis la collerette (10) jusqu'à, au plus, un sommet (14) du support (6), une distance entre la deuxième face (F4) et le sommet (14) du support (6) selon la première direction étant strictement inférieure à l'épaisseur e du premier vitrage (2).

4. Élément vitré (1) selon l'une des revendications 1 à 3, dans lequel le deuxième vitrage (7) est surmoulé par le support (6).

5. Élément vitré (1) selon l'une des revendications 1 à 4, dans lequel le support (6) et le deuxième vitrage (7) présentent des éléments à complémentarité de formes configurés pour bloquer un mouvement du deuxième vitrage (6) par rapport au support dans une direction normale à la première surface (3).

6. Élément vitré (1) selon l'une des revendications 1 à 5, dans lequel le support (6) présente une face intérieure, la face intérieure étant agencée en regard du deuxième vitrage (7), la face intérieure comprenant une encoche (15) formant un logement, le deuxième vitrage (7) étant monté dans le logement formé par l'encoche (15).

7. Élément vitré (1) selon l'une des revendications 1 à 6, dans lequel le deuxième vitrage (7) présente une base (18) et une face (19) opposée à la base (18) par rapport au deuxième vitrage (7), une aire de la base (8) étant strictement supérieure à une aire de la face (19), le deuxième vitrage (7) présentant préférentiellement une forme tronconique définie entre la base (18) et la face (19).

8. Élément vitré (1) selon la revendication 7, dans lequel le support (6) présente une face intérieure, la face intérieure étant agencée en regard du deuxième vitrage (7), la face intérieure comprenant une encoche (15) formant un logement, le deuxième vitrage (7) étant monté dans le logement formé par l'encoche (15), et dans lequel la base du deuxième vitrage (7) est montée dans le logement.

9. Élément vitré (1) selon l'une des revendications 1 à 8, dans lequel le deuxième vitrage (2) présente un coefficient *a₂* d'absorption d'un rayon lumineux inférieur à 0,5 cm ⁻¹, le rayon lumineux présentant au moins une longueur d'onde choisie entre 800 nm et 15 µm, le deuxième vitrage (2) comprenant préférentiellement un élément choisi parmi du sulfure de zinc, du séléniure de zinc et un polymère hybride organo-soufré réticulé comprenant des chaînes linéaires de soufre réticulées par des comonomères organiques.

10. Élément vitré (1) selon l'une des revendications 1 à 9, dans lequel la paroi latérale (8) et la collerette (10) forment un élément monolithique.

11. Élément vitré (1) selon l'une des revendications 1 à 10, comprenant au moins une caméra infrarouge, préférentiellement thermique, la caméra infrarouge étant disposée en regard du deuxième vitrage (7) du côté de la deuxième face (F4) par rapport au premier vitrage (2).

12. Élément vitré (1) selon la revendication 11, comprenant un boîtier, le boîtier étant monté fixe au premier vitrage (2), et au moins une caméra infrarouge, préférentiellement thermique, la caméra infrarouge étant montée au boîtier en regard du deuxième vitrage (7).

13. Élément vitré (1) selon l'une des revendications 1 à 12, dans lequel le deuxième vitrage (7) présente une forme, ramenée dans la première surface (3), choisie parmi une forme allongée et une forme coudée, préférentiellement une forme en « L ».

14. Procédé de fabrication d'un élément vitré (1) selon l'une des revendications 1 à 13, le procédé comprenant les étapes de :
(a) agencement du deuxième vitrage (7) dans un moule d'injection, le deuxième vitrage (7) étant agencé entre une pluralité d'éléments de centrage, les éléments de centrage étant agencés dans le moule d'injection et étant configurés pour positionner le deuxième vitrage (7) à une position prédéterminée dans le moule d'injection,
(b) injection d'un matériau polymère dans le moule d'injection de sorte à former le support (6) en surmoulant le deuxième vitrage (2),
(c) insertion du système (4) de transmission des rayons lumineux infrarouges formé par le deuxième vitrage (7) et par le support (6) lors de l'étape (b) dans l'ajour (5) du premier vitrage (2).

15. Procédé de fabrication d'un élément vitré (1) selon la revendication 14, comprenant une étape antérieure à l'étape (c) d'insertion du système (4), lors de laquelle une plaque est montée sur la première face (F1) de sorte à recouvrir l'ajour.

## Patentansprüche

1. Verglastes Element (1), umfassend:
- eine erste Verglasung (2), die sich entlang einer ersten Oberfläche (3) erstreckt, wobei die erste Verglasung eine erste Hauptfläche (F1) und eine zweite Hauptfläche (F4) aufweist, die der ersten Fläche (F1) in Bezug auf die erste Verglasung (2) gegenüberliegt, die erste Verglasung (2) umfassend eine Öffnung (5), wobei die Öffnung eine Innenwand (11) der ersten Verglasung (2) definiert, die sich entlang einer Dicke der ersten Verglasung (2) erstreckt und einen Durchgang zwischen der ersten Fläche (F1) und der zweiten Fläche (F4) definiert, wobei die erste Verglasung (2) einen ersten Lichtabsorptionskoeffizienten *a₁* für einen Lichtstrahl aufweist, der mindestens eine Wellenlänge aufweist, die zwischen 800 nm und 15 µm ausgewählt ist,
- ein System (4) zum Übertragen von Infrarotlichtstrahlen, das an der ersten Verglasung (2) fest montiert ist, wobei das verglaste Element (1)
**dadurch gekennzeichnet ist, dass:**
- das System (4) zum Übertragen von Infrarotstrahlen einen Träger (6) und eine zweite Verglasung (7) umfasst, wobei die zweite Verglasung (7) einen zweiten Lichtabsorptionskoeffizienten *a₂* für einen Lichtstrahl aufweist, der mindestens eine Wellenlänge aufweist, die zwischen 800 nm und 15 µm ausgewählt ist, wobei der zweite Koeffizient *a₂* streng kleiner als der erste Koeffizient *a₁* ist,
der Träger (6) umfassend eine Seitenwand (8), die die Innenwand (11) mindestens teilweise bedeckt und sich von der zweiten Fläche (F4) in Richtung der ersten Fläche (F1) erstreckt, der Träger (6) umfassend einen Kragen (10), der an der Seitenwand (8) fest montiert ist und sich über die zweite Fläche (F4) erstreckt, wobei sich die zweite Verglasung (7) entlang der ersten Oberfläche (3) erstreckt und in den Träger (6) eingebettet ist und von der Seitenwand (8) umgeben ist, sodass der Träger (6) und die zweite Verglasung (7) direkt in Kontakt stehen,
wobei die Seitenwand (8) so in die Öffnung (5) eingesetzt wird, dass die Öffnung (5) die Seitenwand (8) vollständig umschließt,
wobei der Kragen (10) auf der zweiten Fläche (F4) fest montiert ist, um die erste Fläche (F1) von der zweiten Fläche (F4) abzudichten.

2. Verglastes Element (1) nach Anspruch 1, umfassend eine Haftschicht (13), wobei die Haftschicht (13) mit der zweiten Fläche (F4) und mit einer Fläche des Kragens (10) in Kontakt steht, die der zweiten Fläche (F4) gegenüberliegt, wobei die Haftschicht (13) die Seitenwand (8) vollständig umschließt.

3. Verglastes Element (1) nach Anspruch 1 oder 2, wobei sich die Seitenwand (8) in der ersten Richtung (9) von dem Kragen (10) bis höchstens zu einer Oberseite (14) des Trägers (6) erstreckt, wobei ein Abstand zwischen der zweiten Fläche (F4) und der Oberseite (14) des Trägers (6) in der ersten Richtung strikt kleiner als die Dicke e der ersten Verglasung (2) ist.

4. Verglastes Element (1) nach einem der Ansprüche 1 bis 3, wobei die zweite Verglasung (7) durch den Träger (6) umformt ist.

5. Verglastes Element (1) nach einem der Ansprüche 1 bis 4, wobei der Träger (6) und die zweite Verglasung (7) Elemente mit komplementären Formen aufweisen, die zum Blockieren einer Bewegung der zweiten Verglasung (6) relativ zu dem Träger in einer Richtung senkrecht zu der ersten Oberfläche (3) konfiguriert sind.

6. Verglastes Element (1) nach einem der Ansprüche 1 bis 5, wobei der Träger (6) eine Innenfläche aufweist, wobei die Innenfläche gegenüber der zweiten Verglasung (7) angeordnet ist, die Innenseite umfassend eine Kerbe (15), die eine Aufnahme ausbildet, wobei die zweite Verglasung (7) in der Aufnahme montiert ist, die durch die Kerbe (15) ausgebildet ist.

7. Verglastes Element (1) nach einem der Ansprüche 1 bis 6, wobei die zweite Verglasung (7) eine Basis (18) und eine Fläche (19) aufweist, die der Basis (18) in Bezug auf die zweite Verglasung (7) gegenüberliegt, wobei ein Flächeninhalt der Basis (8) strikt größer als ein Flächeninhalt der Fläche (19) ist, wobei die zweite Verglasung (7) vorzugsweise eine Kegelstumpfform aufweist, die zwischen der Basis (18) und der Fläche (19) definiert ist.

8. Verglastes Element (1) nach Anspruch 7, wobei der Träger (6) eine Innenfläche aufweist, die Innenfläche gegenüber der zweiten Verglasung (7) angeordnet ist, die Innenfläche umfassend eine Kerbe (15), die eine Aufnahme ausbildet, wobei die zweite Verglasung (7) in der Aufnahme montiert ist, die durch die Kerbe (15) ausgebildet ist, und wobei die Basis der zweiten Verglasung (7) in der Aufnahme montiert ist.

9. Verglastes Element (1) nach einem der Ansprüche 1 bis 8, wobei die zweite Verglasung (2) einen Lichtabsorptionskoeffizienten *a₂* eines Lichtstrahls von weniger als 0,5 cm⁻¹ aufweist, wobei der Lichtstrahl mindestens eine Wellenlänge aufweist, die zwischen 800 nm und 15 µm ausgewählt ist, die zweite Verglasung (2) umfassend vorzugsweise ein Element, das aus Zinksulfid, Zinkselenid und einem vernetzten Organoschwefelhybridpolymer ausgewählt ist, umfassend lineare Schwefelketten, die durch organische Comonomere vernetzt sind.

10. Verglastes Element (1) nach einem der Ansprüche 1 bis 9, wobei die Seitenwand (8) und der Kragen (10) ein monolithisches Element ausbilden.

11. Verglastes Element (1) nach einem der Ansprüche 1 bis 10, umfassend mindestens eine Infrarotkamera, vorzugsweise eine Wärmebildkamera, wobei die Infrarotkamera gegenüber der zweiten Verglasung (7) auf der Seite der zweiten Fläche (F4) relativ zu der ersten Verglasung (2) angeordnet ist.

12. Verglastes Element (1) nach Anspruch 11, umfassend ein Gehäuse, wobei das Gehäuse an der ersten Verglasung (2) fest montiert ist, und mindestens eine Infrarotkamera, vorzugsweise eine Wärmebildkamera, wobei die Infrarotkamera an dem Gehäuse gegenüber der zweiten Verglasung (7) montiert ist.

13. Verglastes Element (1) nach einem der Ansprüche 1 bis 12, wobei die zweite Verglasung (7) eine Form aufweist, die in die erste Oberfläche (3) eingebracht ist, die aus einer länglichen Form und einer gebogenen Form ausgewählt ist, vorzugsweise eine "L"-Form.

14. Verfahren zum Herstellen eines verglasten Elements (1) nach einem der Ansprüche 1 bis 13, das Verfahren umfassend die Schritte:
(a) Anordnen der zweiten Verglasung (7) in einer Spritzgussform, wobei die zweite Verglasung (7) zwischen einer Vielzahl von Zentrierelementen angeordnet ist, wobei die Zentrierelemente in der Spritzgussform angeordnet sind und zum Positionieren der zweiten Verglasung (7) an einer zuvor bestimmten Position in der Spritzgussform konfiguriert sind,
(b) Einspritzen eines Polymermaterials in die Spritzgussform, um durch Umformen der zweiten Verglasung (2) den Träger (6) auszubilden,
(c) Einsetzen des Systems (4) zum Übertragen von Infrarotlichtstrahlen, das durch die zweite Verglasung (7) und den Träger (6) während Schritt (b) in der Öffnung (5) der ersten Verglasung (2) ausgebildet wird.

15. Verfahren zum Herstellen eines verglasten Elements (1) nach Anspruch 14, umfassend einen Schritt, vor Schritt (c), des Einsetzens des Systems (4), während eine Platte auf der ersten Fläche (F1) montiert ist, um die Öffnung abzudecken.

## Claims

1. A glazed element (1), comprising:
- a first glazing (2) extending along a first surface (3), the first glazing having a first main face (F1) and a second main face (F4), opposite the first face (F1) with respect to the first glazing (2), the first glazing (2) comprising an opening (5), the opening defining an inner wall (11) of the first glazing (2), extending along a thickness of the first glazing (2) and defining a passage between the first face (F1) and the second face (F4), the first glazing (2)
having a first coefficient *a₁* of light absorption for a light ray having at least one wavelength chosen between 800 nm and 15 µm,
- an infrared light transmission system (4) mounted fixedly to the first glazing (2), the glazed element (1) being **characterized in that**:
- the infrared light transmission system (4) comprises a support (6) and
a second glazing (7), the second glazing (7) having a second coefficient *a₂* of light absorption for a light ray having at least one wavelength chosen between 800 nm and 15 µm, the second coefficient *a₂* being strictly lower than the first coefficient *a₁*,
the support (6) comprising a side wall (8) at least partially covering the inner wall (11) and extending from the second face (F4) towards the first face (F1), the support (6) comprising a flange (10) mounted fixedly to the side wall (8) and extending over the second face (F4),
the second glazing (7) extending along the first surface (3) and being embedded in the support (6), and surrounded by the side wall (8) so that the support (6) and the second glazing (7) are in direct contact,
the side wall (8) being inserted into the opening (5) so that the opening (5) completely surrounds the side wall (8),
the flange (10) being fixedly mounted on the second face (F4) so as to seal off the first face (F1) from the second face (F4).

2. A glazed element (1) according to claim 1, comprising an adhesive layer (13), the adhesive layer (13) being in contact with the second face (F4) and with a face of the flange (10) arranged opposite the second face (F4), the adhesive layer (13) completely surrounding the side wall (8).

3. The glazed element (1) according to claim 1 or 2, wherein the side wall (8) extends in the first direction (9) from the flange (10) to, at the furthest, one vertex (14) of the support (6), a distance between the second face (F4) and the vertex (14) of the support (6) in the first direction being strictly less than the thickness e of the first glazing (2).

4. The glazed element (1) according to one of claims 1 to 3, wherein the second glazing (7) is overmolded by the support (6).

5. The glazed element (1) according to one of claims 1 to 4, wherein the support (6) and the second glazing (7) have form-fitting elements configured to block movement of the second glazing (6) relative to the support in a direction normal to the first surface (3).

6. The glazed element (1) according to one of claims 1 to 5, wherein the support (6) has an internal face, the internal face being arranged opposite the second glazing (7), the internal face comprising a notch (15) forming a recess, the second glazing (7) being mounted in the recess formed by the notch (15).

7. The glazed element (1) according to one of claims 1 to 6, wherein the second glazing (7) has a base (18) and a face (19) opposite the base (18) with respect to the second glazing (7), an area of the base (8) being strictly greater than an area of the face (19), the second glazing (7) preferentially having a frustoconical shape defined between the base (18) and the face (19).

8. The glazed element (1) according to claim 7, wherein the support (6) has an internal face, the internal face being arranged opposite the second glazing (7), the internal face comprising a notch (15) forming a recess, the second glazing (7) being mounted in the recess formed by the notch (15), and wherein the base of the second glazing (7) is mounted in the recess.

9. The glazed element (1) according to one of claims 1 to 8, wherein the second glazing (2) has a coefficient *a₂* of absorption of a light ray of less than 0.5 cm ⁻¹, the light ray having at least one wavelength selected between 800 nm and
15 µm, the second glazing (2) preferentially comprising a member selected from zinc sulfide, zinc selenide and a cross-linked hybrid organo-sulfur polymer, comprising linear sulfur chains cross-linked by organic comonomers.

10. The glazed element (1) according to one of claims 1 to 9, wherein the side wall (8) and the flange (10) form a monolithic element.

11. The glazed element (1) according to one of claims 1 to 10, comprising at least one infrared camera, preferentially thermal, the infrared camera being arranged opposite the second glazing (7) on the side of the second face (F4) with respect to the first glazing (2).

12. The glazed element (1) according to claim 11, comprising a housing, the housing being fixedly mounted to the first glazing (2), and at least one infrared camera, preferentially thermal, the infrared camera being mounted to the housing facing the second glazing (7).

13. The glazed element (1) according to one of claims 1 to 12, wherein the second glazing (7) has a shape, added to the first surface (3), selected from an elongated shape and an elbow shape, preferentially an "L" shape.

14. A method for manufacturing a glazed element (1) according to one of claims 1 to 13, the method comprising the steps of:
(a) arranging the second glazing (7) in an injection mold, the second glazing (7) being arranged between a plurality of centering elements, the centering elements being arranged in the injection mold and being configured to position the second glazing (7) at a predetermined position in the injection mold, (b) injection of
a polymeric material into the injection mold so as to form the support (6), by overmolding the second glazing (2),
(c) inserting the infrared light transmission system (4) formed by the second glazing (7) and the support (6) in step (b) into the opening (5) in the first glazing (2).

15. The method for manufacturing a glazed element (1) according to claim 14, comprising a step prior to step (c) of inserting the system (4), during which a plate is mounted on the first face (F1) so as to cover the opening.
